# EUROPEAN PATENT APPLICATION

(11) **EP 4 456 277 A1**
(43) Date of publication of application: **30.10.2024**
(21) Application number: 22911342.8
(22) Date of filing: 22.12.2022
(51) Int. Cl.: H01M 50/15, H01G 11/78, H01G 11/84, H01M 50/103, H01M 50/129, H01M 50/169

(54) **LID, ELECTRICITY STORAGE DEVICE, AND METHOD FOR MANUFACTURING ELECTRICITY STORAGE DEVICE**

(30) Priority: 22.12.2021 JP 2021208772
(71) Applicant: Dai Nippon Printing Co., Ltd., Tokyo 162-8001 (JP)
(72) Inventor: AKUTSU, Koki, Tokyo 162-8001 (JP); SASAKI, Miho, Tokyo 162-8001 (JP)
(74) Representative: Müller-Boré & Partner Patentanwälte PartG mbB
(86) International application number: PCT/JP2022/047350
(87) International publication number: WO 2023/120640

(57) **Abstract**

This lid is used in an exterior body of an electricity storage device, wherein: the exterior body includes an exterior film which is wound around an electrode body so as to have an opening portion; and the lid is disposed in the opening portion and comprises a lid seal portion that is sealed with the exterior film, and a projecting portion that projects from the lid seal portion.

## Description

### TECHNICAL FIELD

The present invention relates to a lid, an electrical storage device, and a method for manufacturing an electrical storage device.

### BACKGROUND ART

Patent Document 1 discloses an all-solid-state battery as an example of an electrical storage device. The all-solid-state battery includes an electrode assembly, and an outer packaging that seals the electrode assembly. The outer packaging includes an exterior film wound around the electrode assembly so as to have an opening, and a lid disposed at the opening. The exterior film and the outer peripheral surface of the lid are heat-sealed.

### PRIOR ART DOCUMENT

### PATENT DOCUMENT

Patent Document 1: Japanese Patent Laid-open Publication No. 2019-153504

### SUMMARY OF THE INVENTION

### PROBLEMS TO BE SOLVED BY THE INVENTION

In the electrical storage device, a gap may be formed between the lid and the exterior film, for example, between a corner of the lid and the exterior film. Therefore, improvement is needed for suitably sealing the electrode assembly with the outer packaging.

An object of the present invention is to provide an electrical storage device in which an electrode assembly can be suitably sealed with an outer packaging, a lid that is used for the electrical storage device, and a method for manufacturing an electrical storage device.

### MEANS FOR SOLVING THE PROBLEM

A lid according to a first aspect of the present invention is a lid that is used for an outer packaging of an electrical storage device, the outer packaging including an exterior film wound around an electrode assembly so as to have an opening, the lid including a lid seal portion disposed at the opening and sealed to the exterior film, and a protrusion portion protruding from the lid seal portion.

A lid according to a second aspect of the present invention is the lid according to the first aspect, in which the protrusion portion is tapered with increasing distance from the lid seal portion.

A lid according to a third aspect of the present invention is the lid according to the first or second aspect, the lid seal portion including a first seal surface extending in a first direction in front view of the lid, and a second seal surface extending in a second direction crossing the first direction in front view of the lid, the protrusion portion being formed at a boundary between the first seal surface and the second seal surface.

A lid according to a fourth aspect of the present invention is the lid according to the third aspect, in which the protrusion portion extends in the first direction or the second direction in front view of the lid.

A lid according to a fifth aspect of the present invention is the lid according to the third aspect, in which the protrusion portion extends in a third direction crossing the first direction and second direction in front view of the lid.

An electrical storage device according to a sixth aspect of the present invention includes an electrode assembly, and an outer packaging that seals the electrode assembly, the outer packaging includes an exterior film wound around the electrode assembly so as to have an opening, a lid disposed at the opening, a first sealed portion in which surfaces of the exterior film facing each other are sealed, and a second sealed portion in which surfaces of the lid and the exterior film facing each other are sealed, and the lid includes a lid seal portion sealed to the exterior film, and a protrusion portion protruding from the lid seal portion. In the first sealed portion, the surfaces of the exterior film facing each other are sealed with the protrusion portion sandwiched therebetween.

A method for manufacturing an electrical storage device according to a seventh aspect of the present invention is a method for manufacturing an electrical storage device including an electrode assembly, and an outer packaging that seals the electrode assembly, the outer packaging including an exterior film wound around the electrode assembly so as to have an opening, a lid disposed at the opening, and a first sealed portion in which surfaces of the exterior film facing each other are sealed, and a second sealed portion in which surfaces of the lid and the exterior film facing each other are sealed, the lid including a lid seal portion sealed to the exterior film, and a protrusion portion protruding from the lid seal portion, in which the method for manufacturing the electrical storage device includes a step of forming the first sealed portion, and in the step of forming the first sealed portion, surfaces of the exterior film facing each other are sealed with the protrusion portion sandwiched therebetween.

### ADVANTAGE OF THE INVENTION

According to the electrical storage device, the lid, and the method for manufacturing an electrical storage device according to the present invention, an electrode assembly can be suitably sealed with an outer packaging.

### BRIEF DESCRIPTION OF THE DRAWINGS

Fig. 1 is a perspective view of an electrical storage device according to an embodiment.
Fig. 2 is a sectional view showing a layer configuration of an exterior film of the electrical storage device of Fig. 1.
Fig. 3 is a view in which the exterior film of the electrical storage device of Fig. 1 is unfolded.
Fig. 4 is a sectional view taken along line D4-D4 in Fig. 1.
Fig. 5 is a side view of a lid of Fig. 4 where the exterior film is omitted.
Fig. 6 is a plan view of the lid of Fig. 4 where the exterior film is omitted.
Fig. 7 is a flowchart showing an example of a manufacturing process of the electrical storage device of Fig. 1.
Fig. 8 is a sectional view of a lid of an electrical storage device of a modification.
Fig. 9 is a sectional view of a lid of an electrical storage device of another modification.
Fig. 10 is a table showing test results.

### EMBODIMENTS OF THE INVENTION

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. FIRST EMBODIMENT]

### < 1-1. Configuration of electrical storage device>

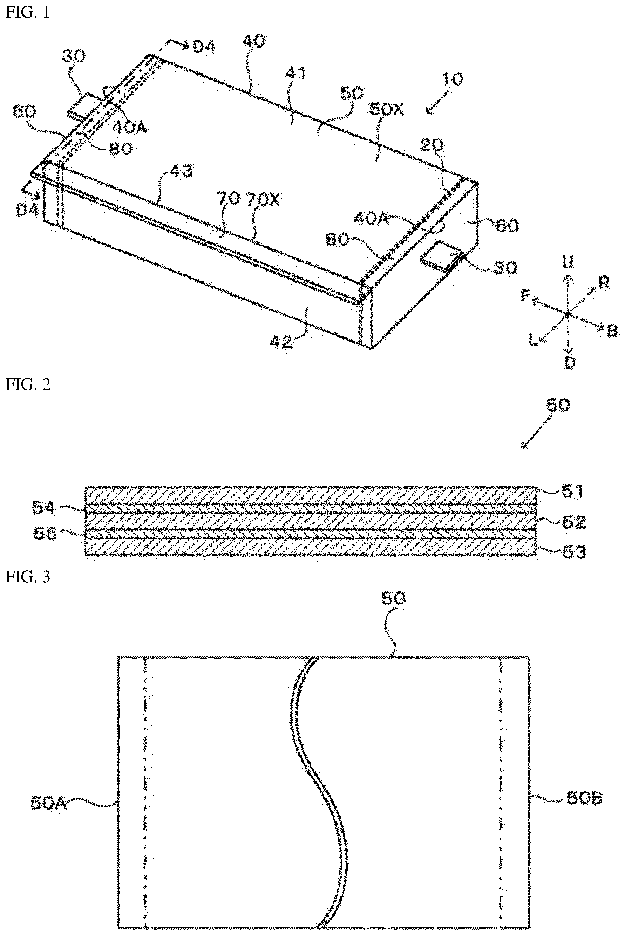

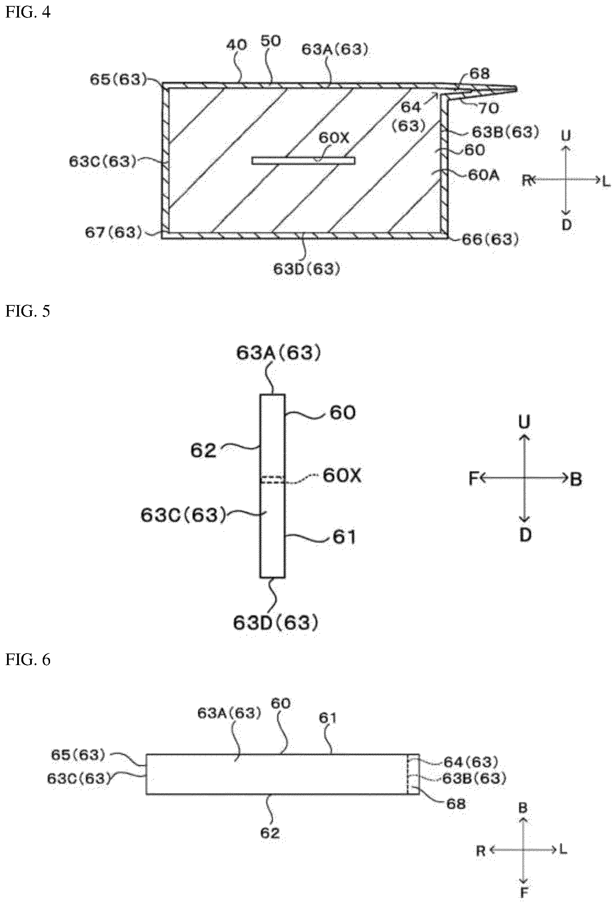

Fig. 1 is a plan view schematically showing an electrical storage device 10 according to a first embodiment. Fig. 2 is a sectional view showing a layer configuration of an exterior film 50 of the electrical storage device 10 of Fig. 1. Fig. 3 is a view in which the exterior film 50 of the electrical storage device 10 of Fig. 1 is unfolded. Fig. 4 is a sectional view taken along line D4-D4 in Fig. 1. Fig. 5 is a side view of a lid 60 of the electrical storage device 10 of Fig. 1. Fig. 6 is a plan view of the lid 60 of Fig. 5. In Figs. 1, 4 to 6, 8 and 9, the direction along arrow UD indicates a thickness direction of the electrical storage device 10, the direction along arrow LR indicates a width direction of the electrical storage device 10, and the direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) forming an electrical storage member such as a capacitor, and a separator. In the present embodiment, the shape of the electrode assembly 20 is a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40, for example. The electrode terminal 30 is only required to enable input and output of electrical power in the electrode assembly 20, and is not required to protrude from the outer packaging 40, for example. When the lid 60 described later is made from, for example, metal, the lid 60 may also function as the electrode terminal 30. In this case, the lid 60 having a function as an electrode terminal may, or is not required to, protrude from the outer packaging 40.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 is wound around the electrode assembly 20 so as to have an opening 40A, and the lid 60 is disposed on the side of the electrode assembly 20 so as to close the opening 40A.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

The exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 20 to 150 µm.

The barrier layer 52 is joined to, for example, the base material layer 51 with an adhesive layer 54 interposed therebetween. The barrier layer 52 in the exterior film 50 is made from, for example, an aluminum foil from the viewpoint of moisture resistance, processability such as extensibility, and cost. The aluminum foil preferably contains iron from the viewpoint of suitability for packaging in packaging of the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer 52 may include a metal foil having barrier properties, a deposited film, and a resin layer. Examples of the metal foil include an aluminum alloys, stainless steel, titanium steel, and steel plates.

From the viewpoint of barrier properties, pinhole resistance and suitability for packaging, the thickness of the barrier layer 52 is, for example, preferably 15 to 100 µm, more preferably 30 to 80 µm. When the thickness of the barrier layer 52 is 15 µm or more, the exterior film 50 is less likely to be broken even if stress is applied by packaging processing. When the thickness of the barrier layer 52 is 100 µm or less, an increase in mass of the exterior film 50 can be reduced, and a decrease in weight energy density of the electrical storage device 10 can be suppressed.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

The lid 60 has, for example, a cuboid shape, and is made from, for example, a resin material. The lid 60 may be formed by, for example, cold-molding the exterior film 50, or may be a metal molded article. The lid 60 includes a lid main body 60A. The lid main body 60A includes a first surface 61, a second surface 62, and a lid seal portion 63. The first surface 61 faces the electrode assembly 20. The second surface 62 is a surface on a side opposite to the first surface 61. The lid seal portion 63 is connected to the first surface 61 and the second surface 62, and heat-sealed to the heat-sealable resin layer 53 of the exterior film 50. The lid seal portion 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in front view of the lid 60. The second seal surface 63B and the third seal surface 63C are connected to the first seal surface 63A and form a lateral surface of the lid 60. The second seal surface 63B and the third seal surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 63D forms the lower surface of the lid 60. The fourth seal surface 63D extends in a first direction (LR direction in the present embodiment) in front view of the lid 60.

The lid seal portion 63 further includes boundaries 64, 65, 66 and 67. The boundary 64 is a boundary between the first seal surface 63A and the second seal surface 63B. The boundary 65 is a boundary between the first seal surface 63A and the third seal surface 63C. The boundary 66 is a boundary between the fourth seal surface 63D and the second seal surface 63B. The boundary 67 is a boundary between the fourth seal surface 63D and the third seal surface 63C. The shapes of the boundaries 64 to 67 may be angular, or may be rounded off by chamfering. In the present embodiment, the boundaries 64 to 67 are angular.

From the viewpoint of suitably heat-sealing the lid 60 and the exterior film 50, the main materials of materials for forming the lid 60 and materials for forming the heat-sealable resin layer 53 of the exterior film 50 are preferably the same. In the present embodiment, polypropylene is a main material of materials for forming the lid 60 and materials for forming the heat-sealable resin layer 53. Note that the main material refers to, for example, a material that accounts for 50% or more of the materials contained in a constituent element.

In the present embodiment, a through-hole 60X into which the electrode terminal 30 is inserted is formed in the lid 60. The through-hole 60X extends through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, resin. In the electrical storage device 10, the location at which the electrode terminal 30 protrudes to the outside can be arbitrarily selected. For example, the electrode terminal 30 may protrude to the outside from a hole formed in one of the six surfaces of the outer packaging 40. In this case, a small gap between the outer packaging 40 and the electrode terminal 30 is filled with, for example, a resin. In the electrical storage device 10, the lid 60 and the electrode terminal 30 are provided separately, but the lid 60 and the electrode terminal 30 may be integrally formed. When the electrode terminal 30 does not protrude from the end edge of the outer packaging 40, the through-hole 60X is not required to be formed in the lid 60.

In the present embodiment, with the exterior film 50 wound around the electrode assembly 20 so as to have the opening 40A, surfaces of the exterior film 50 facing each other (heat-sealable resin layer 53) are heat-sealed to form a first sealed portion 70.

The first sealed portion 70 is formed by heat-sealing a portion including a first edge 50A and a portion including a second edge 50B of the exterior film 50 shown in Fig. 3. The first sealed portion 70 extends in a longitudinal direction of the outer packaging 40. In the outer packaging 40, a location at which the first sealed portion 70 is formed can be arbitrarily selected. In the present embodiment, a root 70X of the first sealed portion 70 is preferably located on a side 43 of a boundary between the first surface 41 and the second surface 42 of the outer packaging 40. The first surface 41 has a larger area over the second surface 42. The root 70X of the first sealed portion 70 may be located on an arbitrary surface of the outer packaging 40. In the present embodiment, the first sealed portion 70 protrudes outward with respect to the electrode assembly 20 in plan view. For example, the first sealed portion 70 may be folded toward the second surface 42 or toward the first surface 41 of the outer packaging 40.

In the present embodiment, a second sealed portion 80 is formed by heat-sealing the heat-sealable resin layer 53 of the exterior film 50 and the lid seal portion 63 of the lid 60. Hereinafter, the sealing strength between the heat-sealable resin layer 53 of the exterior film 50 and the lid seal portion 63 of the lid 60 may be referred to as sealing strength of the second sealed portion 80. The sealing strength of the second sealed portion 80 is the sealing strength between the heat-sealable resin layer 53 and the lid 60 in the long-side portion of the lid seal portion 63, that is, the lid seal portion 63 extending in the LR (width) direction in Fig. 1. The exterior film 50 is in the UD (vertical) direction in Fig. 1 with respect to the lid 60, and the sealing strength of the second sealed portion 80 is measured on the basis of a distance of the second sealed portion 80 in the FB (depth) direction. The sealing strength of the second sealed portion 80 of the lid 60 divided into a plurality of parts including long sides and short sides is the sealing strength at the long-side portion of the lid seal portion 63 of the plurality of parts.

From the viewpoint of suitably maintaining the state in which the electrode assembly 20 is sealed with the outer packaging 40, the sealing strength of the second sealed portion 80 is preferably 40 N/15 mm or more, more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 150 N/15 mm or less. The sealing strength of the second sealed portion 80 is preferably in the range of 40 N/15 mm to 150 N/15 mm, 50 N/15 mm to 150 N/15 mm, 60 N/15 mm to 150 N/15 mm, 70 N/15 mm to 150 N/15 mm, or 85 N/15 mm to 150 N/15 mm.

In the present embodiment, the lid 60 has a protrusion portion 68 protruding from the lid seal portion 63 so that a gap is hardly formed between the exterior film 50 and the lid 60. The protrusion portion 68 may be formed integrally with the lid main body 60A, or may be formed separately from the lid main body 60A and joined to the lid main body 60A. In the present embodiment, the protrusion portion 68 is formed integrally with the lid main body 60A. In the lid seal portion 63, a location at which the protrusion portion 68 is formed can be arbitrarily selected. A gap between the exterior film 50 and the lid 60 is likely to be formed, for example, between the root 70X of first sealed portion 70 and the lid 60. In particular, if the root 70X of the first sealed portion 70 is located at boundaries 64 to 67 of the lid 60, ease of filling resin between the root 70X of the first sealed portion 70 and the lid 60 is likely to be deteriorated. Therefore, it is preferable that the protrusion portion 68 is formed at a position where the root 70X of the first sealed portion 70 is located in the lid seal portion 63. In the present embodiment, the root 70X of the first sealed portion 70 is located at the boundary 64 of the lid 60. Therefore, it is preferable that the protrusion portion 68 is formed at the boundary 64 in the lid seal portion 63. In the present embodiment, the first sealed portion 70 is sealed with the protrusion portion 68 sandwiched therein. The protrusion portion 68 may be formed on at least one of the first seal surface 63A, the second seal surface 63B, the third seal surface 63C, the fourth seal surface 63D, the boundary 65, the boundary 66 and the boundary 67.

The shape of the protrusion portion 68 can be arbitrarily selected. In the present embodiment, the protrusion portion 68 has a plate shape. The thickness of the protrusion portion 68 can be arbitrarily selected. In the present embodiment, the thickness of the protrusion portion 68 decreases with increasing distance from the boundary 64. In other words, the protrusion portion 68 is tapered with increasing distance from the boundary 64. The thickness of the protrusion portion 68 may be constant, or may increase with increasing distance from the boundary 64.

A direction in which the protrusion portion 68 extends can be arbitrarily selected. In the present embodiment, the protrusion portion 68 extends along the first direction (LR direction in the present embodiment). The protrusion portion 68 may extend along the second direction (UD direction in the present embodiment).

The length of the protrusion portion 68 can be arbitrarily selected as long as it is equal to or smaller than the length of the first sealed portion 70. For example, the length of the protrusion portion 68 may be substantially equal to the length of the first sealed portion 70, or may be 30% to 50% of the length of the first sealed portion 70.

### < 1-2. Method for manufacturing electrical storage device>

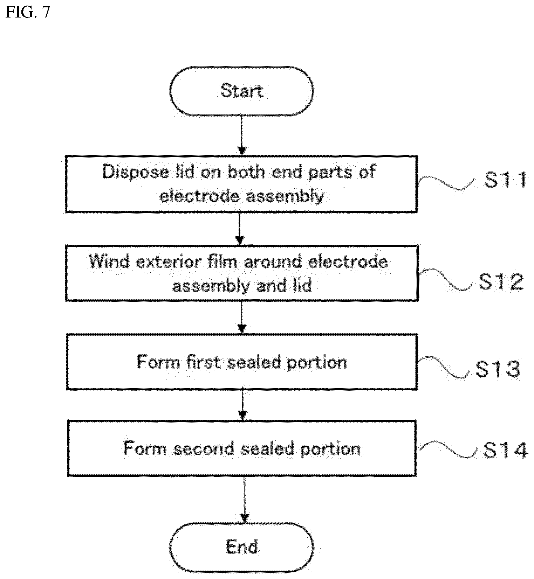

Fig. 7 is a flowchart showing an example of a method for manufacturing the electrical storage device 10. The method for manufacturing the electrical storage device 10 includes, for example, a first step, a second step, a third step and a fourth step. The first to fourth steps are carried out by, for example, an apparatus for manufacturing the electrical storage device 10.

In the first step in step S11, the manufacturing apparatus disposes the lid 60 with the electrode terminal 30 attached to both end parts of the electrode assembly 20. When the first step is completed, the electrode terminal 30 and the electrode of the electrode assembly 20 are electrically connected.

The second step in step S12 is carried out after the first step. In the second step, the manufacturing apparatus winds the exterior film 50 around the electrode assembly 20 and the lid 60 with tension applied to the exterior film 50 while controlling the movement of the electrode assembly 20 and the lid 60 by a control unit. The control unit is, for example, a groove into which the electrode assembly 20 and the lid 60 are fitted. The control unit may be an apparatus that applies an external force to the electrode assembly 20 and the lid 60 so that the electrode assembly 20 and the lid 60 do not move. The control unit may be an apparatus that applies a force to the electrode assembly 20 and the lid 60 in a direction opposite to a direction in which the exterior film 50 is pulled. Note that the control unit may include a roller for removing wrinkles of the exterior film 50 by running on the exterior film 50 with the exterior film 50 being pulled.

The third step in step S13 is carried out after the second step. In the third step, the manufacturing apparatus forms the first sealed portion 70 by heat-sealing the heat-sealable resin layer 53 in a portion including the first edge 50A of the exterior film 50 and the heat-sealable resin layer 53 in a portion including the second edge 50B such that the protrusion portion 68 of the lid 60 is sandwiched by the exterior film 50, where the heat-sealing is performed with tension applied to the exterior film 50 while the movement of the electrode assembly 20 and the lid 60 is controlled. The third step corresponds to a step of forming the first sealed portion 70.

The fourth step in step S14 is carried out after the third step. The manufacturing apparatus forms the second sealed portion 80 by heat-sealing the exterior film 50 and the lid 60.

### < 1-3. Action and effect electrical storage device>

In the electrical storage device 10, a gap is hardly formed between the exterior film 50 and the lid 60 in the step of forming the first sealed portion 70 because the protrusion portion 68 is formed on the lid seal portion 63 of the lid 60. Therefore, the electrode assembly 20 can be suitably sealed with the outer packaging 40.

### [2. Modifications]

The above-described embodiment is an example of possible forms of an electrical storage device, a lid and a method for manufacturing an electrical storage device according to the present invention, and is not intended to limit the forms thereof. The electrical storage device, the lid and the method for manufacturing an electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

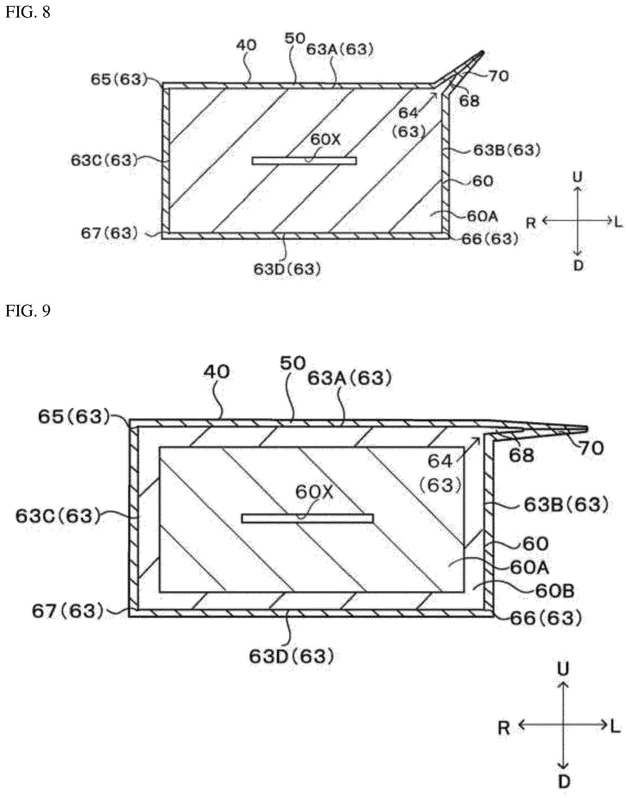

<2-1 >
In the electrical storage device 10 of the above-described embodiment, the direction in which the protrusion portion 68 extends can be arbitrarily changed. For example, as shown in Fig. 8, the protrusion portion 68 may extend in a first direction (LR direction in the embodiment) and a third direction crossing a second direction (UD direction in the embodiment) in front view of the lid 60.

<2-2>
In the electrical storage device 10 of the above-described embodiment, the configuration of the lid 60 can be arbitrarily changed. As shown in Fig. 9, the lid 60 may include a frame 60B that covers the lid main body 60A. In this modification, for example, an arbitrary material such as metal or resin can be used as a material for forming the lid main body 60A. The material for forming the frame 60B is, for example, a resin that can be suitably sealed to the heat-sealable resin layer 53 of exterior film 50. In this modification, the lid seal portion 63 and the protrusion portion 68 of the lid 60 are formed on the frame 60B.

<2-3>
In the electrical storage device 10 of the above-described embodiment, the specific method for forming the protrusion portion 68 of the lid 60 can be arbitrarily changed. For example, the protrusion portion 68 may be formed by an adhesive film or the like which is joined to the lid seal portion 63 of the lid main body 60A. In this modification, for example, a plurality of adhesive films may be joined in a stacked state to the lid seal portion 63 to form the protrusion portion 68, or the adhesive film may be joined to the lid seal portion 63 in a flap shape to form the protrusion portion 68.

<2-4>
For suitably bonding the exterior film 50 and the lid 60, the electrical storage device 10 of the above-described embodiment may include an adhesive film disposed between the exterior film 50 and the lid 60. In this modification, for example, the second sealed portion 80 is formed after the lid 60 to which the adhesive film is bonded is attached to the opening 40A at both ends of the outer packaging 40. For example, the adhesive film is wound around the lid 60 so as to cover the entire surface of the lid seal portion 63 of the lid 60. The adhesive film is preferably configured to be wider than the lid seal portion 63 of the lid 60 as a whole. In this case, the adhesive film can be easily adhered to the lid 60. Further, since boundaries 64 to 67 of the lid seal portion 63 are covered with the adhesive film, bondability between the lid 60 and the adhesive film is enhanced.

The adhesive film can be arbitrarily selected as long as it is a film capable of bonding exterior film 50 and lid 60. The adhesive film is preferably a laminate (laminate film) including at least a heat-sealable resin layer, a heat-resistant base material layer and a heat-sealable resin layer in the stated order. As specifications about the heat-sealable resin layer of the adhesive film, specifications about the heat-sealable resin layer 53 can be applied. As materials for forming the heat-sealable resin layers on both sides of the adhesive film, the same material or different materials may be used, and materials that match the material for forming constituting the heat-sealable resin layer 53 of the exterior film 50 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the exterior film 50, the same material as that for forming the heat-sealable resin layer 53 of the exterior film 50.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Polyethylene terephthalate is particularly preferable because it is inexpensive and has high strength.

The adhesive film preferably has adhesion. When the second sealed portion 80 is formed with the adhesive film disposed between the exterior film 50 and the lid 60, the adhesive film is hardly displaced with respect to the lid 60 and the exterior film 50. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 to 20 wt% or less.

<2-5>
In the above-described embodiment, a location at which the electrode terminal 30 is disposed can be arbitrarily selected. For example, the electrode terminal 30 may protrude from the first sealed portion 70.

### [3. Examples]

The inventors of the present application conducted a test of confirming the ability of an outer packaging to seal an electrode assembly for electrical storage devices of examples and a comparative example. In the following description, among the elements forming the electrical storage devices of examples and the comparative example, elements that are identical to those in the embodiment are given the same symbols as in the embodiment for illustration purpose.

In the test, the electrical storage devices of Examples 1 and 2 and the comparative example were manufactured, and a part of an outer packaging 40 was cut open, and an ageless seal check spray (manufactured by Mitsubishi Gas Chemical Company, Inc.) was applied to the inside of the outer packaging 40. After about 5 minutes, whether or not a check liquid was leaked from a second sealed portion 80 was visually confirmed. The specifications of the electrical storage devices of Examples 1 and 2 and the electrical storage devices of the comparative example are as follows.

The electrical storage device of Example 1 has one protrusion portion 68 at a boundary 64 of a lid 60. The electrical storage device of Example 1 has the protrusion portion 68 only at the boundary 64 of the lid 60. The electrical storage device of Example 2 has one protrusion portion 68 at each of a boundary 64, a boundary 65, a boundary 66 and a boundary 67 of a lid 60. The electrical storage device of Example 2 has the protrusion portion 68 only at the boundary 64, the boundary 65, the boundary 66 and the boundary 67 of the lid 60. In the electrical storage device of the comparative example, a lid 60 has no protrusion portion 68.

For the sealing conditions of a first sealed portion 70 of the electrical storage device of each of Examples 1 and 2 and the comparative example, the temperature is 210°C, the time is 5 seconds, and the pressure is 0.5 MPa. For the sealing conditions of the second sealed portion 80 of the electrical storage device of each of Examples 1 and 2 and the comparative example, the temperature is 220°C, the time is 5 seconds, and the pressure is 0.4 MPa.

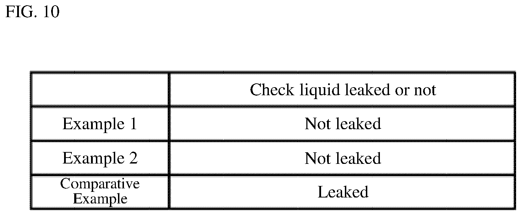

Fig. 10 is a table showing test results. In the electrical storage devices of Examples 1 and 2, the check liquid was not leaked. That is, for the electrical storage devices of Examples 1 and 2, it was confirmed that a gap was not formed between the outer packaging 40 and the lid 60. This may be because in the electrical storage devices of Examples 1 and 2, the protrusion portion 68 is formed on the lid 60. On the other hand, in the electrical storage device of the comparative example, the check liquid was leaked from the second sealed portion 80, particularly a gap between the boundary 64 of the lid 60 and the first sealed portion 70. That is, for the electrical storage device of the comparative example, it was confirmed that a gap was formed between the outer packaging 40 and the lid 60.

### DESCRIPTION OF REFERENCE SIGNS

10: Electrical storage device
20: Electrode assembly
40: Outer packaging
40A: Opening
50: Exterior film
60: Lid
63: Lid seal portion
63A: First seal surface
63B: Second seal surface
64: Boundary
68: Protrusion portion

## Claims

1. A lid that is used for an outer packaging of an electrical storage device,
the outer packaging including an exterior film wound around an electrode assembly so as to have an opening,
the lid comprising:
a lid seal portion disposed at the opening and sealed to the exterior film; and
a protrusion portion protruding from the lid seal portion.

2. The lid according to claim 1, wherein
the protrusion portion is tapered with increasing distance from the lid seal portion.

3. The lid according to claim 1 or 2, wherein
the lid seal portion includes:
a first seal surface extending in a first direction in front view of the lid; and
a second seal surface extending in a second direction crossing the first direction in front view of the lid, and
the protrusion portion being formed at a boundary between the first seal surface and the second seal surface.

4. The lid according to claim 3, wherein
the protrusion portion extends in the first direction or the second direction in front view of the lid.

5. The lid according to claim 3, wherein
the protrusion portion extends in a third direction crossing the first direction and second direction in front view of the lid.

6. An electrical storage device comprising:
an electrode assembly; and
an outer packaging that seals the electrode assembly,
the outer packaging including:
an exterior film wound around the electrode assembly so as to have an opening;
a lid disposed at the opening;
a first sealed portion in which surfaces of the exterior film facing each other are sealed; and
a second sealed portion in which surfaces of the lid and the exterior film facing each other are sealed,
the lid including a lid seal portion sealed to the exterior film, and a protrusion portion protruding from the lid seal portion, wherein
in the first sealed portion, the surfaces of the exterior film facing each other are sealed with the protrusion portion sandwiched therebetween.

7. A method for manufacturing an electrical storage device including an electrode assembly, and an outer packaging that seals the electrode assembly,
the outer packaging including:
an exterior film wound around the electrode assembly so as to have an opening;
a lid disposed at the opening;
a first sealed portion in which surfaces of the exterior film facing each other are sealed; and
a second sealed portion in which surfaces of the lid and the exterior film facing each other are sealed,
the lid including a lid seal portion sealed to the exterior film, and a protrusion portion protruding from the lid seal portion, wherein
the method for manufacturing the electrical storage device comprises
a step of forming the first sealed portion, and
in the step of forming the first sealed portion, the surfaces of the exterior film facing each other are sealed with the protrusion portion sandwiched therebetween.
